# EUROPÄISCHE PATENTSCHRIFT

(11) **EP 1 016 259 B1**
(45) Veröffentlichungstag und Bekanntmachung des Hinweises auf die Patenterteilung: **19.01.2005**
(21) Anmeldenummer: 98951221.5
(22) Anmeldetag: 26.08.1998
(51) Int. Cl.: H04M 3/50

(54) **VERFAHREN ZUM ÜBERTRAGEN VON "MWI-DIENST"-SPEZIFISCHEN NACHRICHTEN IN TELEKOMMUNIKATIONSNETZEN, INSBESONDERE IN HYBRIDEN DECT/ISDN-SPEZIFISCHEN TELEKOMMUNIKATIONSNETZEN**
METHOD FOR TRANSMITTING SPECIFIC MESSAGES OF "MESSAGE WAITING INDICATION SERVICES" IN TELECOMMUNICATION NETWORKS, PARTICULARLY IN HYBRID AND SPECIFIC DECT/ISDN TELECOMMUNICATION NETWORKS
PROCEDE POUR TRANSMETTRE DES MESSAGES SPECIFIQUES DE "SERVICES D'INDICATION DE MESSAGE EN INSTANCE" DANS DES RESEAUX DE TELECOMMUNICATION, NOTAMMENT DANS DES RESEAUX DE TELECOMMUNICATION HYBRIDES SPECIFIQUES DECT/ISDN

(30) Priorität: 15.09.1997 DE 19740558
(43) Veröffentlichungstag der Anmeldung: 05.07.2000
(73) Patentinhaber: SIEMENS AKTIENGESELLSCHAFT, 80333 München (DE)
(72) Erfinder: KAMPERSCHROER, Erich, D-46499 Hamminkeln (DE)
(86) Internationale Anmeldenummer: PCT/DE1998/002508
(87) Internationale Veröffentlichungsnummer: WO 1999/014925

(56) Entgegenhaltungen:
- WO-A-93/16564

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"] und/oder drahtgebunden erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf ein Verfahren zum Übertragen von "MWI-Dienst"-spezifischen Nachrichten in Telekommunikationsnetzen, insbesondere in hybriden DECT/ISDNspezifischen Telekommunikationsnetzen.

Hybride Telekommunikationsnetze sind z.B. unterschiedliche - drahtlose und/oder drahtgebundene - Telekommunikationsteilnetzen bzw. -systemen enthaltene Telekommunikationsnetze.

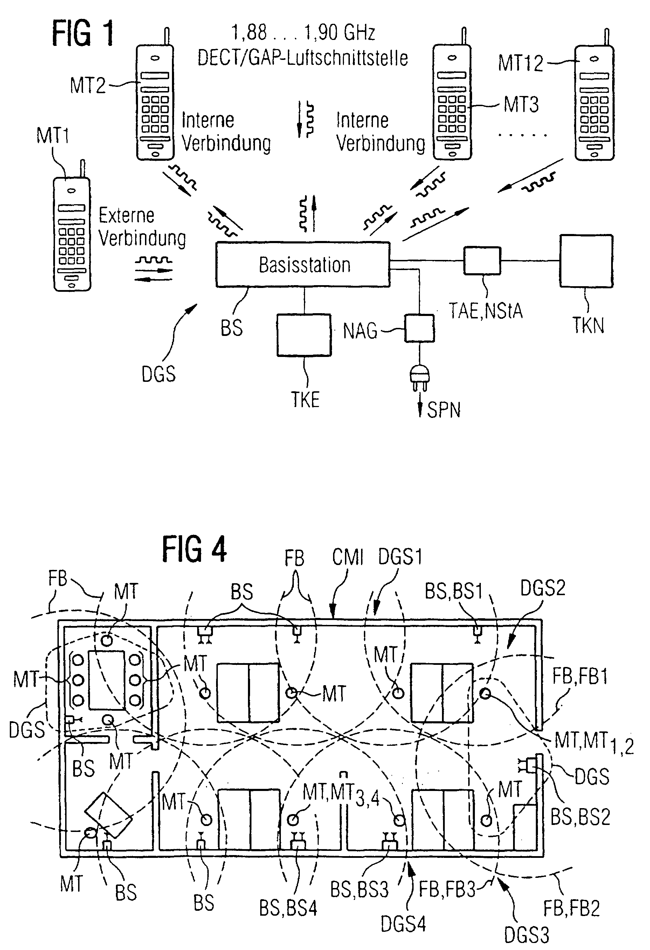

Telekommunikationssysteme der vorstehend definierten Art sind beispielsweise DECT-Systeme [**D**igital **E**nhanced (früher: **E**uropean) **C**ordless **T**elecommunication; *vgl.* ***(1):*** *Nachrichtentechnik Elektronik 42 (1992) Jan*./*Feb*. *Nr. 1, Berlin, DE; U. Pilger "Struktur des DECT-Standards", Seiten 23 bis 29* ***in Verbindung mit*** *der ETSI-Publikation ETS 300175-1...9, Okt*. *1992;* ***(2):*** *Telcom Report 16 (1993), Nr*. *1, J. H. Koch: "Digitaler Komfort für schnurlose Telekommunikation - DECT-Standard eröffnet neue Nutzungsgebiete", Seiten 26 und 27;* ***(3):*** *tec 2*/*93 - Das technische Magazin von Ascom "Wege zur universellen mobilen Telekommunikation", Seiten 35 bis 42;* ***(4):*** *Philips Telecommunication Review, Vol*. *49, No. 3, Sept*. *1991, R*.*J*. *Mulder:" DECT, a universal cordless access system";* ***(5):*** *WO 93*/*21719 (FIG 1 bis* 3 mit *dazugehöriger Beschreibung)*] oder GAP-Systeme (**G**eneric **A**ccess **P**rofile; *vgl. ETSI-Publikation ETS 300444, December 1995, ETSI, FR),* die beispielsweise gemäß der Darstellung in FIGUR 1 aufgebaut sein können. Der GAP-Standard ist eine Untermenge des DECT-Standards, dem die Aufgabe zukommt, die Interoperabilität der DECT-Luftschnittstelle für Telefonanwendungen sicherzustellen.

Nach dem DECT/GAP-Standard können gemäß der Darstellung in FIGUR 1 an einer DECT/GAP-Basisstation BS eines DECT/GAP-Systems DGS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT/GAP-Mobilteilen MT1...MT12 aufgebaut werden. Die Zahl 12 ergibt sich aus einer Anzahl "k" von für den Duplexbetrieb des DECT/GAP-Systems DGS zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z.B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z.B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z.B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

FIGUR 2 zeigt ausgehend von der Druckschrift *Components 31 (1993), Heft 6, Seiten 215 bi s 218; S. Althammer, D . Brückmann: "Hochoptimierte IC's für DECT-Schnurlostelefone"* den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell [*vgl.* ***(1):*** *Unterrichtsblätter - Deutsche Telekom, Jg*. *48, 2*/*1995, Seiten 102* bis *111;* ***(2):*** *ETSI-Publikation ETS 300175-1...9, Oktober 1992*] aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungssteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die prinzipielle Funktionsweise der vorstehend aufgeführten Schaltungseinheiten ist beispielsweise in der vorstehend zitierten Druckschrift *Components 31 (1993), Heft 6, Seinen 215 bis 218* beschrieben.

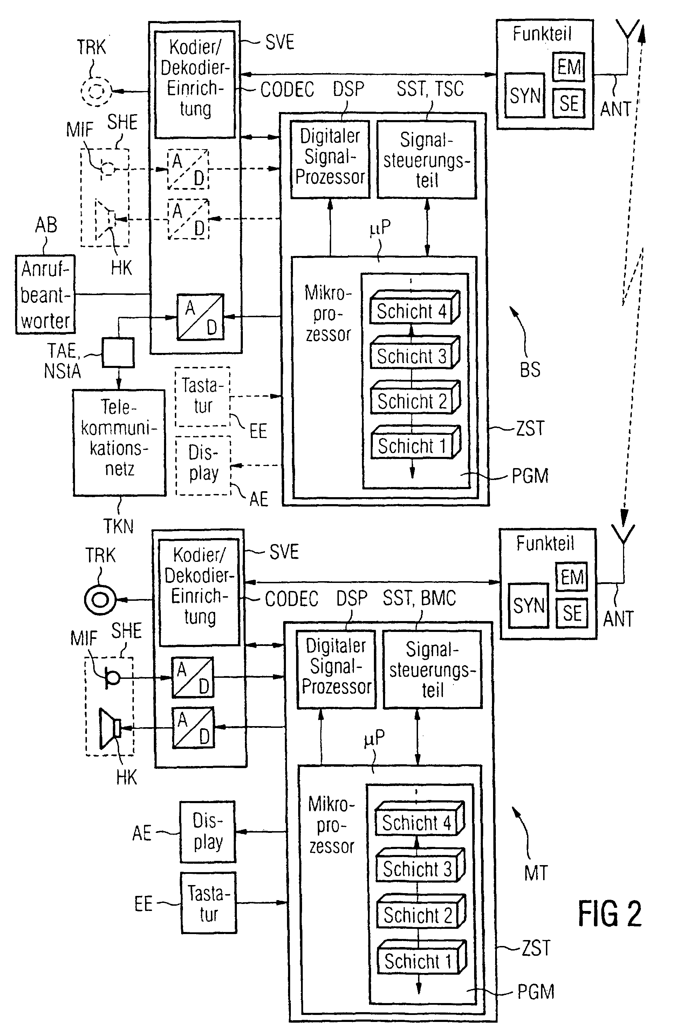

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden und weist zudem einen Anrufbeantworter AB auf. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

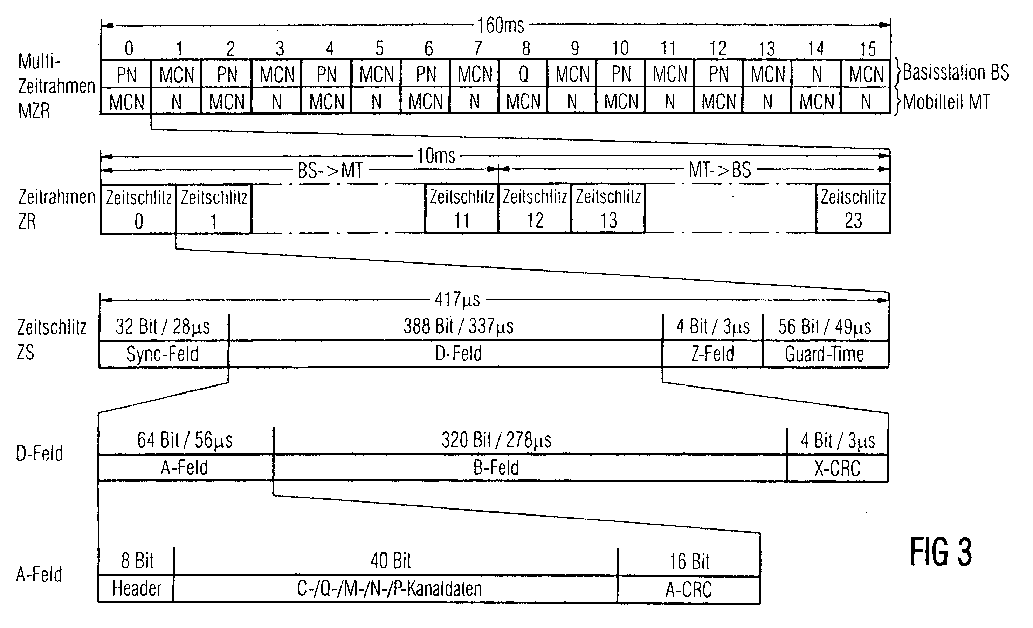

FIGUR 3 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems DGS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,9 GHz Funknachrichten nach dem TDMA-Prinzip gemäß FIGUR 3 in einer vorgegebenen zeitlichen Abfolge von der Basisstation BS zum Mobilteil MT und vom Mobilteil MT zur Basisstation BS (**T**ime **D**ivision **D**uplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-, M-, N-, P-, Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

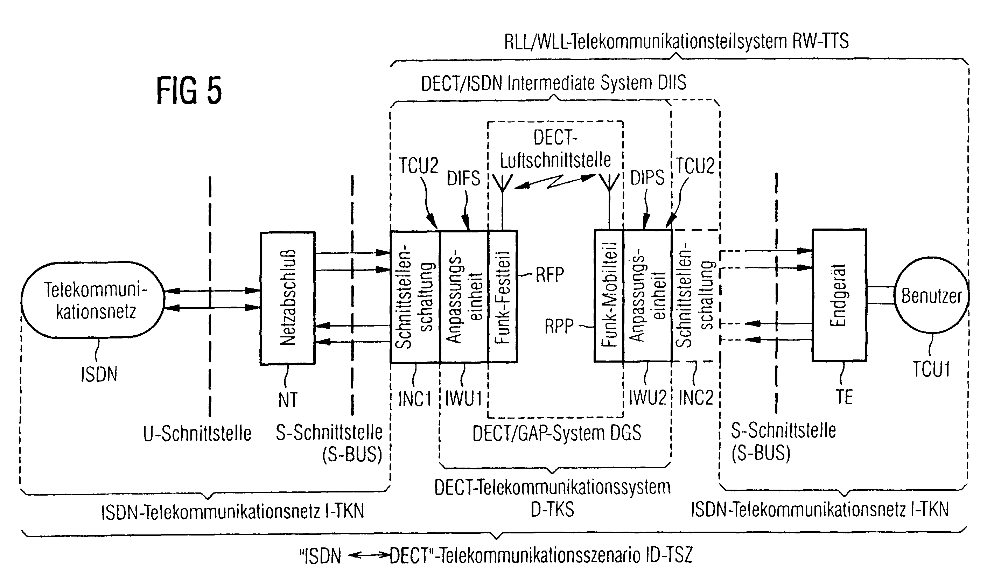

FIGUR 4 zeigt ausgehend von dem DECT/GAP-System DGS nach FIGUR 1 ein zellulares DECT/GAP-Multisystem CMI (**C**ordless **M**ulticell **I**ntegration), bei dem mehrere der vorstehend beschriebenen DECT/GAP-Systeme DGS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer großen Bewegung von Menschen, für die Installation eines zellularen DECT/GAP-Multisystems CMI möglich. Ein Teil der in dem Großraumbüro angeordneten Basisstationen BS sind dabei im Unterschied zu den in den FIGUREN 1 und 2 gezeigten Basisstationen gemäß der WO 94/10764 als Antenna Diversity-Basisstationen ausgebildet. Die Konzentration der DECT/GAP-Systeme DGS ist dabei so ausgeprägt (lückenlose Funkabdeckung des geographischen Ortes), daß einzelne DECT/GAP-Systeme DGS durch die sich überlappenden zellularen DECT/GAP-Funkbereiche FB in der gleichen Umgebung arbeiten.

Gleiche Umgebung kann dabei je nach Überlappungsgrad bedeuten, daß
a) eine erste Basisstation BS1 eines vorzugsweise als ersten DECT/GAP-System DGS1 in einem ersten Funkbereich FB1 und eine zweite Basisstation BS2 eines zweiten DECT/GAP-System DGS2 in einem zweiten Funkbereich FB2 angeordnet sind und Telekommunikationsverbindungen zu mindestens einem Mobilteil MT_{1,2} aufbauen können,
b) eine dritte Basisstation BS3 eines dritten DECT/GAP-System DGS3 und eine vierte Basisstation BS4 eines vierten DECT/GAP-System DGS4 in einem gemeinsamen dritten Funkbereich FB3 angeordnet sind und Telekommunikationsverbindungen zu mindestens einem Mobilteil MT_{3,4} aufbauen können.

Das in den FIGUREN 1 bis 4 dargestellte Schnurlos-Telekommunikations-Szenario, bei dem DECT-Mobilteile über eine DECT-Luftschnittstelle mit einer privaten (residential) DECT-Basisstation (FIGUR 1) bzw. mit einer oder mehreren privaten oder öffentlichen (public) DECT-Basisstationen (FIGUR 4) verbindbar sind, kann nun gemäß der Publikation *"Vortrag von A*. *Elberse, M. Barry, G. Fleming zum Thema: "DECT Data Services - DECT in Fixed and Mobile Networks", 17*./*18*. *Juni 1996, Hotel Sofitel, Paris; Seiten 1 bis 12 und Zusammenfassung*" dahingehend erweitert werden, daß die DECT-Mobilteile über die DECT-Luftschnittstelle mit privaten und öffentlichen DECT-Basisstationen verbindbar sind.

Dieses Szenario kann nun gemäß der WO95/05040 (vgl. Figuren 3 bis 8 mit der jeweils dazugehörigen Beschreibung) im Hinblick auf ein **"U**niverselles **M**obil-**T**elekommunikations-**S**ystem" (UMTS) wiederum dahingehend erweitert werden, daß pikozellenbezogene Schnurlos-Telekommunikationssysteme (z.B. die bisher diskutierten DECT-Systeme unter CTM-Gesichtspunkten *(**C**ordless **T**erminal **M**obility; vgl. ETSI-Publikationen* ***(1):*** *"IN Architecture and Functionality for the support of CTM", Draft Version 1.10, September 1995;* ***(2):*** *"Cordless Terminal Mobility (CTM) - Phase 1, Service Description", Draft DE*/*NA-010039, Version 6, 2.Oktober 1995)* in eine übergeordnete Netzinfrastruktur (z.B. ISDN-, PSTN-, GSM- und/oder Satelliten-Netze) für Zugriffe *(vgl*. *ETSI-Publikation "**C**TM* ***A****ccess* ***P****rofile (CAP)" prETS 300824, November 1996)* einzubinden. Dies kann - gemäß dem Patentanspruch 1 der WO95/05040 durch eine als DECT-Repeater ausgebildete DECT-Basisstation erreicht werden. In einem universellen Mobil-Telekommunikationssystem wird DECT vorrangig als eine "Netzzugriffstechnologie" für mobile Kommunikationsdienste *(vgl. Vortrag von A. Elberse, M. Barry, G. Fleming zum Thema: "DECT Data Services - DECT in Fixed and Mobile Networks", 17*./*18*. *Juni 1996, Hotel Sofitel, Paris; Seiten 1 bis 12 und Zusammenfassung)* und nicht als Netz verstanden.

Stellvertretend für das vorstehend vorgestellte Szenario zeigt FIGUR 5 -ausgehend von den Druckschriften *"Nachrichtentechnik Elektronik, Berlin 45, (1995), Heft 1, Seiten 21* *bis 23 und Heft 3, Seiten 29 und 30" sowie IEE Colloquium 1993, 173; (1993), Seiten 29*/*1 - 29*/*7; W.Hing, F.Halsall: "Cordless access* to the *ISDN basic rate service"* auf der Basis eines **D**ECT/**I**SDN **I**ntermediate **S**ystems DIIS gemäß *der ETSI-Publikation prETS 300822, Februar 1997 -* ein **"I**SDN ↔ **D**ECT"-**T**elekommunikations**sz**enario ID-TSZ (**I**ntegrated **S**ervices **D**igital **N**etwork ↔ **D**igital **E**nhanced **C**ordless **T**elecommunication) mit einem **I**SDN-**T**elekommuni**k**ations**n**etz I-TKN [*vgl. Druckschrift "Nachrichtentechnik Elektronik, Berlin 41-43,* ***T****eil: 1 bis 10,* ***T****1: (1991) Heft 3, Seiten 99 bis 102;* ***T****2: (1991) Heft 4, Seiten 138 bis 143;* ***T****3: (1991) Heft 5, Seiten 179 bis 182 und Heft 6, Seiten 219 bis 220;* ***T****4: (1991) Heft 6, Seiten 220 bis 222 und (1992) Heft 1, Seiten 19 bis 20;* ***T****5: (1992) Heft 2, Seiten 59 bis 62 und (1992) Heft 3, Seiten 99 bis 102;* ***T****6: (1992) Heft 4, Seiten 150 bis 153;* ***T****7: (1992) Heft 6, Seiten 238 bis 241;* ***T****8: (1993) Heft 1, Seiten 29 bis 33;* ***T****9: (1993) Heft 2, Seiten 95 bis 97 und (1993) Heft 3, Seiten 129 bis 135;* ***T****10: (1993) Heft 4, Seiten 187 bis 190;"*] und einem mit dem ISDN-Telekommunikationsnetz I-TKN verbundenen DECT-**T**elekommuni**k**ations**s**ystem D-TKS.

Das DECT-Telekommunikationssystem D-TKS kann dabei - wie im weiteren näher ausgeführt werden wird - Bestandteil eines DECT/ISDN Intermediate Sysems DIIS bzw. eines RLL/WLL-Telekommunikationsteilsystems RW-TTS sein. Das DECT-Telekommunikationssystem D-TKS und somit das DECT/ISDN Intermediate System DIIS bzw. das RLL/WLL-Telekommunikationsteilsystem RW-TTS basieren vorzugsweise auf ein DECT/GAP-System DGS wie es beispielsweise in FIGUR 1 dargestellt ist.

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152). Stattdessen ist es im Rahmen eines UMTS-Szenarios auch möglich, daß das ISDN-Telekommunikationsnetz I-TKN als GSM-Netz oder als PSTN-Netz (**P**ublic **S**witched **T**elecommunications **N**etwork) ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsnetzes I-TKN die eingangs erwähnten Systeme/Netze sowie zukünftige Systeme/Netze in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z. B. DECT-Kanälen) in klassischen leitungsgebundenen Telekommunikationssystemen, wie dem ISDN, (RLL/WLL-Szenario) gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z.B. unter der Einbindung des DECT-Systems DS dem ISDN-Teilnehmer ISDN-Dienste an Standard-ISDN-Schnittstellen verfügbar gemacht werden (vgl. FIGUR 4) .

In dem "ISDN ↔ DECT"-Telekommunikationsszenario ID-TSZ nach FIGUR 5 ist zum einen ein erster Telekommunikationsteilnehmer (Benutzer) TCU1 (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystem RW-TTS enthaltene - DECT/ISDN Intermediate System DIIS, eine weitere standardisierte S-Schnittstelle (S-BUS), einen Netzabschluß NT (**N**etwork **T**ermination) und eine standardisierte U-Schnittstelle des ISDN-Telekommunikationsnetzes I-TKN und zum anderen ein zweiter Telekommunikationsteilnehmer TCU2 als Endnutzer des DECT/ISDN Intermediate Systems DIIS in die ISDN-Welt mit den darin verfügbaren Diensten eingebunden.

Das DECT/ISDN Intermediate System DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das DECT/ISDN Intermediate System DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und gegebenenfalls eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

Die FIGUR 5 zeigt - wie bereits erwähnt - zum einen (1. Möglichkeit) als typisches RLL/WLL-Szenario wie das DECT/ISDN Intermediate System DIIS im Rahmen des RLL/WLL-Telekommunikationsteilsystem RW-TTS in das ISDN-Telekommunikationsnetz I-TKN als lokale Nachrichtenübertragungsschleife eingebunden ist und zum anderen (2. Möglichkeit) wie das DECT/ISDN Intermediate System DIIS unter CAP-Gesichtspunkten (**C**ordless Terminal Mobility **A**ccess **P**rofile) nur netzseitig mit dem ISDN-Telekommunikationsnetz I-TKN verbunden ist. Bei der 2. Möglichkeit ist die Schnittstellenschaltung INC2 der zweiten Telekommunikationsschnittstelle DIPS zur S-Schnittstelle nicht aktiv oder überhaupt nicht vorhanden. Um diesen Sachverhalt insgesamt grafisch darzustellen und zu untermauern, ist die Schnittstellenschaltung INC2 der zweiten Telekommunikationsschnittstelle DIPS gestrichelt gezeichnet. Während die zweite Telekommunikationsschnittstelle DIPS bei der 1. Möglichkeit beispielsweise nicht mobilteilspezifisch, d.h. mit Bedienoberfläche, ausgebildet ist, ist die zweite Telekommunikationsschnittstelle DIPS bei der 2. Möglichkeit als typisches Mobilteil mit einer Bedienoberfläche ausgebildet.

Im Rahmen des von ETSI standardisierten CTM Access Profile (CAP) ist es beabsichtigt, *(vgl. ETSI-Publikation* ***"C****TM* ***A****ccess* ***P****rofile (CAP)" prETS 300???, September* 1996, *Kap*. *4. Introduction)* den rufunabhängigen Dienst **"M**essage **W**aiting **I**ndication (MWI) zu realisieren.

Der MWI-Dienst informiert den Benutzer eines Schnurlos-Mobilteils (z.B. eines DECT-Mobilteils) darüber, daß eine für den Benutzer bestimmte Nachricht in dem Netz vorliegt. Mit dieser Nachricht kann dem Benutzer beispielsweise angezeigt werden, daß ein Dritter den Benutzer versucht hat anzurufen (z. B. Anzeige des Status einer "Voice Mail Box") oder daß der Dritte dem Benutzer eine Kurznachricht (Short Message) hinterlassen hat.

Für die Bereitstellung des MWI-Dienstes werden gemäß der Publikationen ***(1):*** *ETSI-Publikation DE*/*NA-010 033 "ISDN, Message Waiting Indication (MWI) Supplementary Service, Service Description", Stage 1, Standard for MWI in Fixed (Public) ISDN, Draft Version 5, Oktober 1995);* ***(2):*** *ETSI-Publikation DE*/*SPS-05069-1: "ISDN, Message Waiting Indication (MWI) Supplementary Service, Digital Subscriber Signalling System No. 1 (DSS1) Protokoll, Part 1: Protokoll Specification", Stage 3, Standard for MWI in Fixed (Public) ISDN, Version 5 rev. 1, September 1995;)* ***(3):*** *ECMA-Publikation "Private Telecomrrrunication Networks (PTN), Specification, Functional Model and Information flows, Message Waiting In dication Supplementary* *Service", Stage 1, Second Standard for MWI and PTN's, Interim Fifth Draft, September 1995* werden verschiedene obligatorische (mandatory) oder optionale MWI-spezifische Prozeduren definiert.

Zu den obligatorischen Prozeduren zählen
1. eine REGISTER-Prozedur, mit der ein Benutzer des in einem Netz angebotenen MWI-Dienstes von der Netzwerkgesellschaft manuell registriert wird,
2. eine INDICATE-Prozedur, mit dem dem Benutzer des MWI-Dienstes der ihm vorliegende Nachrichtentyp und die Anzahl der ihm vorliegenden Nachrichten mitgeteilt werden.

Zu den optionalen Prozeduren gehören die ACTIVATE- oder DEACTIVATE-Prozeduren bzw. eine INTERROGATE-Prozedur, auf die im Rahmen der vorliegenden Erfindung nicht weiter eingegangen wird.

Von den obligatorischen Prozeduren wird im folgenden nur die INDICATE-Prozedur ausführlicher betrachtet und beschrieben. Die daraus resultierenden Ausführungen sind jedoch auf die anderen vorstehend genannten Prozeduren prinzipiell in gleicher Weise anwendbar.

Mit den für die Bereitstellung des MWI-Dienstes vorstehend genannten Prozeduren werden darüber hinaus dienstspezifische Parameter übertragen, die, wie die Prozeduren, entweder obligatorisch oder optional sind. Zu den obligatorischen Parametern zählen
1. der Typ der Nachricht, die für den Benutzer vorliegt,
2. die Anzahl der für den Benutzer vorliegenden Nachrichten des nach 1. definierten Nachrichtentyps.

Zu den optionalen Parametern zählen beispielsweise eine von dem Netz vergebene Nachrichtenkennung, eine CLIP-Nummer, mit der die anrufende Person identifizierbar ist und eine Datumsund Zeitangabe der empfangenen bzw. gelöschten Nachrichten.

Der MWI-Dienst wird dem Benutzer des DECT-Mobilteils über eine benutzerspezifische "Benutzer-Schnittstelle" (Man Machine Interface), z. B. durch Tonsignalisierung, Anzeigen des MWI-Textes, Anbieten von MWI-spezifischen Menüdarstellungen, etc. mitgeteilt bzw. zur Verfügung gestellt.

Für die Realisierung eines MWI-Dienstes sind in der Öffentlichkeit bereits diverse Vorschläge eingebracht und diskutiert worden.

So besteht beispielsweise die Vorstellung, den weder im DECT/GSM-Standard noch im GSM-Standard explizit erwähnten MWI-Dienst implizit durch das Senden einer Kurznachricht (Short Message) - wie sie im GSM-Standard und im DECT/GSM-Standard *(vgl*. *ETSI-Publikation prETS 300764, April 1995;)* vorgesehen ist - zu realisieren *(vgl. Vorschlagspräsentation von CSELT, ITALTEL und TELECOM ITALIA auf der "ETSI-RES-03 N"-Sitzung vom 20-22 Mai 1996 in Madrid, Umfang des Vorschlages 2 Seiten).* Dabei soll durch eine über eine DECT-Luftschnittstelle mit dem DECT-Mobilteil (**P**ortable **P**art PP) verbundene DECT-Basisstation (**F**ixed **P**art FP) das DECT-spezifische Informationselement "IWU-TO-IWU" *(vgl. ETSI-Publikation ETS 300175-5, Oktober 1992, 7.7.23 und Annex G.3)* für die Übertragung des MWI-Dienstes verwendet werden. Bei diesem Vorschlag muß das DECT-Mobilteil für die Bereitstellung des MWI-Dienstes die Kurznachrichten mit einer Nachrichtenlänge von z. B. 160 Informationseinheiten speichern. Das Speichern von Kurznachrichten, wie es in GSM-Handys üblich ist, ist für die vorliegenden DECT-Mobilteile eine wegen der mit dieser Speicherung verbundenen Verteuerung des Mobilteils unerwünscht.

Ein weiterer Vorschlag für die Realisierung des MWI-Dienstes beschäftigt sich damit, wie der MWI-Dienst für DECT/ISDN-Systeme implementiert werden kann. Basierend auf den Publikationen ***(1):*** *ETSI-Publikation DE*/*NA-010 033 "ISDN, Message* *Waiting Indication (MWI) Supplementary Service, Service Description", Stage 1, Standard for MWI in Fixed (Public) ISDN, Draft Version 5, Oktober 1995);* ***(2):*** *ETSI-Publikation DE*/*SPS-05069-1: "ISDN, Message Waiting Indication (MWI) Supplementary Service, Digital Subscriber Signalling System No. 1 (DSS1) Protokoll, Part 1: Protokoll Specification", Stage 3, Standard for MWI in Fixed (Public) ISDN, Version 5 rev. 1, September 1995;)* ***(3):*** *ECMA-Publikation "Private Telecommunication Networks (PTN) , Specification, Functional Model and Information flows, Message Waiting Indication Supplementary Service", Stage* 1, *Second Standard for MWI and PTN's, Interim Fifth Draft, September 1995* und der ETSI-Publikation *ETS 300 175-5, Oktober 1992, Kap*. *7.7.15* besteht die diesem Vorschlag zugrundeliegende Idee darin, ISDN-spezifische Dienste (z. B. den MWI-Dienst) auf der DECT-Seite mit dem DECT-protokollspezifischen Informationselement "FACILITY" tranparent über die DECT-Luftschnittstelle zu übertragen. Dieser Vorschlag beinhaltet eine singuläre, DECT/ISDN-spezifische Lösung, die für die Realisierung des MWI-Dienstes für den dem universellen Mobil-Telekommunikationssystem zugrundeliegenden CAP-Standard ungeeignet ist.

Eine weitere Alternative beschäftigt sich damit, den MWI-Dienst über ein proprietäres Protokoll zu realisieren, wobei in diesem proprietären Protokoll das DECT-spezifische Informationselement "ESCAPE TO PROPRIETARY" *(vgl*. *ETSI-Publikation 300 175-5, März 1996, Kapitel 7.7.45)* benutzt wird. Diese prorietäre Lösung ist den CAP-Standard ebenfalls ungeeignet.

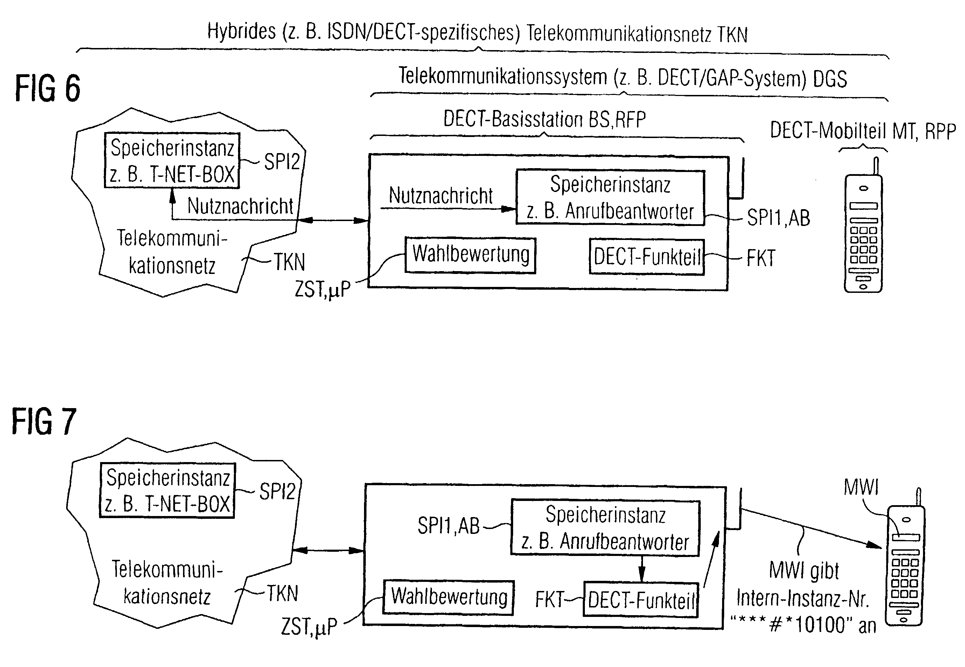

FIGUR 6 zeigt aufgrund der vorstehenden Ausführungen eine mögliche Anordnung (Konfiguration) für eine MWI-Übertragung (MWI-Szenario). Die Konfiguration ist ein hybrides, z.B. ISDN/DECT-spezifisches Telekommunikationsszenario ID-TSZ mit einem z.b. als ISDN-Netz ausgebildeten Telekommunikationsnetz TKN und einem als DECT/GAP-System ausgebildeten Telekommunikationssystem DGS. Das Telekommunikationssystem DGS enthält mindestens eine DECT-Basisstation BS, RFP und mindestens ein mit der Basisstation durch drahtlose Telekommunikation verbindbares DECT-Mobilteil MT, RPP. Das Mobilteil MT, RPP und die Basissstation BS, RFP sind z.B. gemäß der Darstellung in FIGUR 2 aufgebaut. In der Basisstation sind einzelne für die nachfolgende Erläuterung der MWI-Übertragung einzelne Funktionseinheiten noch einmal dargestellt. Diese Funktionseinheiten sind das DECT-Funkteil FKT, die Zentrale Steuerung ZST mit Mikroprozessor µP zur Wahlbewertung und der als Speicherinstanz im MWI-Kontext bezeichnete Anrufbeantworter AB. Da die dargestellte Konfiguration eine weitere außerhalb des Telekommmuniattionssystems DGS in dem Telekommunikationsnetz TKN angeordnete Speicherinstanz, z.B. die sogenannte T-NET-BOX, enthält, werden die als Anrufbeantworter AB ausgebildete Speicherinstanz als INTERN-Speicherinstanz bzw. erste Speicherinstanz SPI1 und die als T-NET-BOX auusgebildete Speicherinstanz als EXTERN-Speicherinstanz bzw. zweite Speicherinstanz SPI2 bezeichnet. Als INTERN-Speicherinstanz kann neben dem Anrufbeantworter AB auch eine sogenannte "Missed Calls Liste" in Frage kommen.

Mit der in FIGUR 6 dargestellten Konfiguration können mittels der standardisierten Prozedur "Message Waiting Indication" Ereignisse (z.B. das Speichern von Nutznachrichten unterschiedlichster Art, die von einem beliebigen Netzteilnehmer den Benutzern/Besitzern der DECT-Mobilteile MT, RPP übertragen werden sollen) den DECT-Mobilteilen MT, RPP übermittelt werden.

Diese Ereignisse werden dem Benutzer/Besitzer des Mobilteils in geeigneter Weise signalisiert, z. B. durch eine Leuchtdiode oder eine Anzeige im Display.

Ein grundlegendes Problem stellt sich nun dadurch, daß diese Ereignisse sowohl innerhalb als auch außerhalb des Telekommunikationssystems DGS auftreten können (Stw.: INTERN-Speicherinstanz bzw. EXTERN-Speicherinstanz).

Unabhängig davon ist es Voraussetzung, daß der Benutzer ein DECT-Mobilteil besitzt, das den MWI-Service (Message Waiting Indication) unterstützt, dieser Service wird dazu benutzt, um dem Benutzer auf seinem Endgerät anzuzeigen, daß bei der INTERN-Speicherinstanz und/oder der EXTERN-Speicherinstanz eine Nutznachricht für ihn eingegangen ist, während er nicht zu Hause war.

Der Benutzer sieht, nachdem er nach Hause kommt, die eingegangene Indikation und ruft die entsprechende Speicherinstanz an.

Hieraus resultiert ein weiteres Problem. So weiß der Benutzer nicht, welche Speicherinstanz er anrufen muß, die INTERN-Speicherinstanz oder die EXTERN-Speicherinstanz.

Dies rührt daher, daß die DECT-Basisstation BS, RFP zwar externe Ereignisse von internen unterscheiden kann, aber keine Möglichkeit hat, dies dem ihr zugeordneten DECT-Mobilteil MT, RPP zu signalisieren.

Aus der WO 93/16564 ist ein Verfahren zum Übertragen von "MWI-Dienst"-spezifischen Nachrichten in Telekommunikationsnetzen bekannt, bei dem eine "MWI-Dienst"-spezifischen Nachricht in einem Telekommunikationssystem des Telekommunikationsnetzes von einem ersten Telekommunikationsgerät an ein mit dem ersten Telekommunikationsgerät durch Telekommunikation verbindbares zweites Telekommunikationsgerät übertragen wird, in der angegeben wird, dass für den Teilnehmer des zweiten Telekommunikationsgerätes eine Nutznachricht vorliegt.

Die der Erfindung zugrundeliegende Aufgabe besteht darin, bei der Übertragung von "MWI-Dienst"-spezifischen (Message Waiting Indication) Nachrichten in Telekommunikationsnetzen, insbesondere in hybriden DECT/ISDN-spezifischen Telekommunikationsnetzen, zur Anzeige von für Telekommunikationsteilnehmer in Telekommunikationssystemen hinterlegten Nutznachrichten zwischen systeminternen und systemexternen Nachrichten unterscheiden zu können.

Diese Aufgabe wird durch den Patentanspruch 1 gelöst.

Die der Erfindung zugrundeliegende Idee besteht dabei darin, daß die Einrichtung (z.B. die DECT-Basisstation), die die MWI-Nachricht an das ihr zugeordnete mit ihr verbundene Endgerät (z.B. das DECT-Mobilteil) schickt bzw. weiterleitet, eine zusätzliche Indikation, die eindeutig zwischen internem und externem Ereignis unterscheidet, überträgt.

Dies kann unterschiedliche Ausführungen haben, alle Ausführungen können jedoch immer wieder auf die genannte grundsätzliche Lösung zurückgeführt werden.

Nach dem standardisierten Protokoll für den Service "Message Waiting Indication" kann die genannte Einrichtung innerhalb der "Message Waiting Indication"-Signalisierung die Rufnummer des entsprechenden Servers mitschicken. Hier wird - ausgehend von der Konfiguration in den FIGUR 6 bis 12 implizit oder explizit anhand der Rufnummer zwischen der internen und der externen Instanz unterschieden.
a) Implizite Lösung:
   Die EXTERN-Speicherinstanz habe die Nummer "01301111" und es liegt eine Nachricht für den Benutzer des Mobilteils vor. Die EXTERN-Instanz sendet daraufhin z.B. eine ISDN-Meldung "Message Waiting Indication" (externe Nachricht), an die Basisstation, die diese Meldung transparent über die DECT-Luftschnittstelle an das Mobilteil weiterleitet. Wenn der Benutzer die Nachricht abfragen will, so wählt er die mitübertragene Nummer der EXTERN-Instanz. Diese Nummer wird wiederum transparent von der Basisstation weitergeleitet. Hat die Basisstation eine interne Nachricht in der ihr zugeordneten INTERN-Instanz, die z.B. in der Basisstation oder außerhalb der Basistation aber innerhalb des Telekommunikationsystems angeordnet ist, so sendet die Basisstation wie bei der externen Nachricht eine für das Mobilteil identisch aussehende Meldung, mit dem Unterschied, daß hier die Nummer eindeutig von einer externen Nummer nach dem internationalen und nationalen Nummernschema unterscheidet, eine solche eindeutige Nummer wäre z.B. "***#*10100". Wenn der Benutzer die Nachricht abfragen will, so wählt er diese übertragene Nummer der INTERN-Instanz. Die Basisstation bewertet die vom Mobilteil gewählte Nummer und verzweigt, wenn nötig zu der internen Instanz.
   Die Schwierigkeit bei dieser Lösung liegt darin, eine geeignete, eindeutige Nummer zu spezifizieren, die weltweit keine Konflikte mit nationalen Nummernschemata aufwirft.
b) Explizite Lösung:
   Die angegebene ISDN-Meldung "Message Waiting Indication" hat zusätzliche Informationselemente, mit Hilfe derer externe Ereignisse von internen Ereignissen unterschieden werden können. Dies könnte vom Mobilteil dazu benutzt werden, entweder die Basisstation intern oder aber das Telekommunikationsnetz extern anzusprechen.
   Das Problem bei dieser Lösung ist, daß die Reaktion des zugeordneten Mobilteils unterschiedlich wäre, je nachdem, welche Informationselemente von welchen Netzen/Basisstationen gesendet werden. Hierdurch verliert man Flexibilität im Mobilteil und muß sich heute bereits auf verschiedenste Netzvarianten einstellen.

Weitere vorteilhafte Weiterbildungen der Erfindung sind in den Unteransprüchen angegeben.

Ein Ausführungsbeispiel der erfindung wird anhand der FIGUREN 7 bis 12 erläutert.

FIGUREN 7 bis 9 zeigen ein MWI-Szenario, bei dem in einer INTERN-Instanz eine Nutznachricht für den Benutzer des Mobilteils gespeichert ist, bei dem dies durch den MWI-Service angezeigt wird und bei dem die Nutznachricht auf Abruf ausgegeben wird.

FIGUREN 10 bis 12 zeigen ein MWI-Szenario, bei dem in einer EXTERN-Instanz eine Nutznachricht für den Benutzer des Mobilteils gespeichert ist, bei dem dies durch den MWI-Service angezeigt wird und bei dem die Nutznachricht auf Abruf ausgegeben wird.

FIGUR 7 zeigt wie das Ereignis "Speicherung einer Nutznachricht für den Benutzer des Mobilteils MT, RPP in der INTERN-Instanz SPI1" dem Benutzer über eine MWI-Meldung auf dem Display des Mobilteils angezeigt wird. Die MWI-Meldung gibt dabei insbesondere als Absenderinformation eine DECT-basisstationsspezifische Nummer "10100", anhand der die Basisstation BS, RFP und die INTERN-Instanz identifizierbar ist, und als Zusatzinformation eine von der Basisstation BS, RFP erzeugte Ergänzungsnummer "***#*" an. Sie wird von der Basisstation BS, RFP unmittelbar an das Mobilteil MT, RPP übertragen.

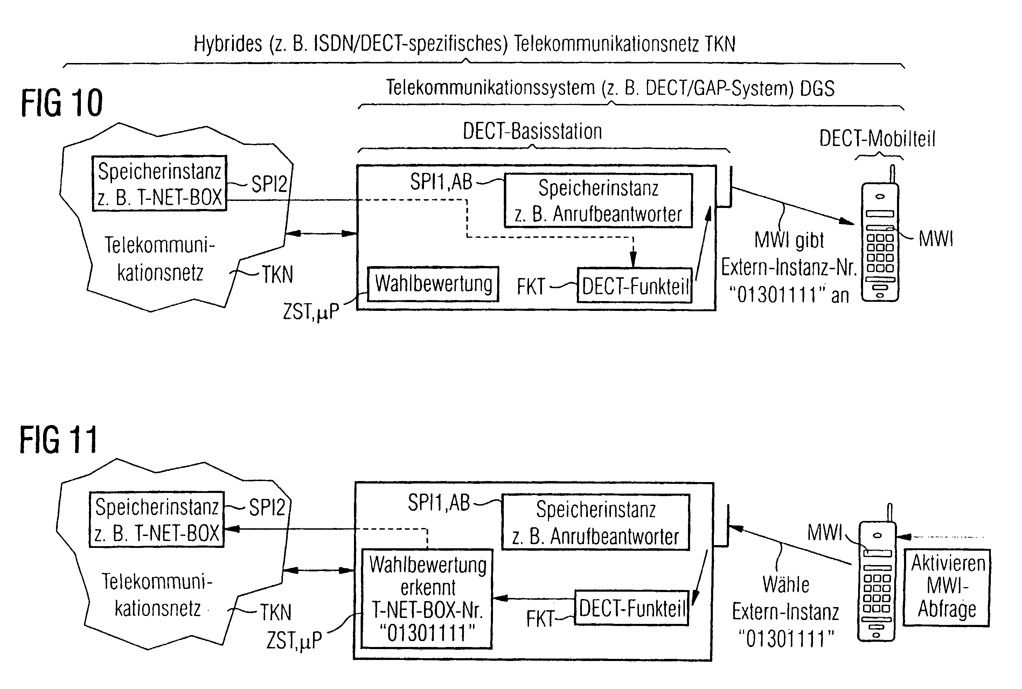

Mit der Ergänzungsnummer kann zwischen dem Ereignis "Speicherung einer Nutznachricht für den Benutzer des Mobilteils MT, RPP in der INTERN-Instanz SPI1" - gemäß der FIGUREN 7 bis 9 - und dem Ereignis "Speicherung einer Nutznachricht für den Benutzer des Mobilteils MT, RPP in der EXTERN-Instanz SPI2" - gemäß der FIGUREN 10 bis 12 unterschieden werden.

Die Ergänzungsnummer "***#*" wird in vorteilhafter Weise der DECT-basisstationsspezifische Nummer "10100" vorangestellt. Alernativ sind aber auch andere Varianten möglich, so z.B., daß die Ergänzungsnummer "***#*" der DECT-basisstationsspezifische Nummer "10100" nachgestellt wird.

Statt die Zusatzinformation mit der INTERN-Instanz-Nummer zu verknüpfen, ist es auch möglich, die Zusatzinformation mit der INTERN-Instanz-Nummer (vgl. FIGUREN 10 bis 12) zu verknüpfen. In diesem Fall, kann die Zusatzinformation dann entweder von dem Telekommunikationsnetz TKN oder wie vorstehend von der Basisstation generiert werden.

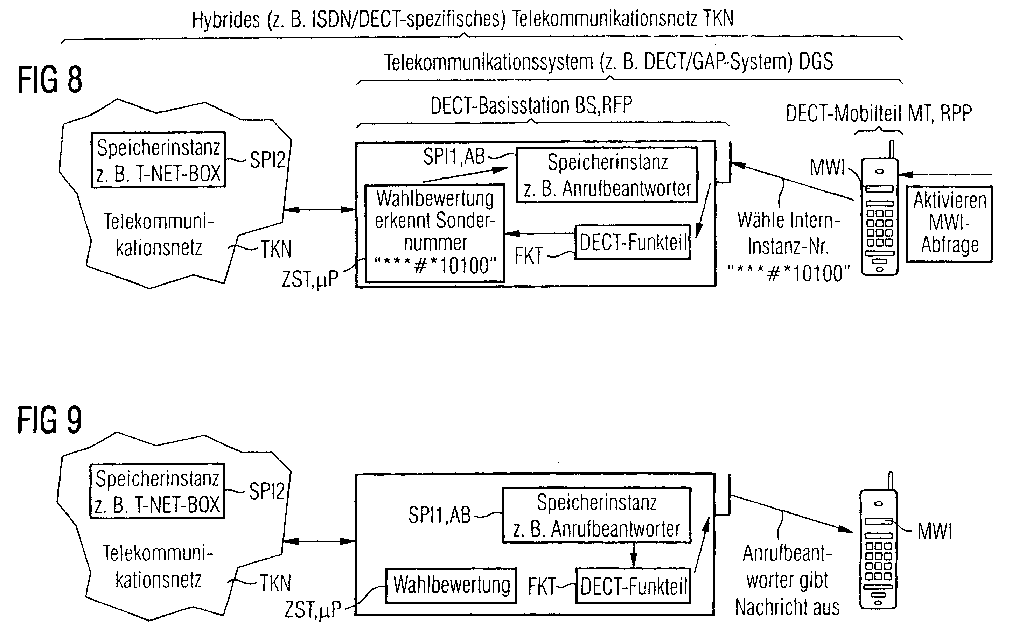

FIGUR 8 zeigt wie auf Eingabe des Benutzers am Mobilteil MT, RPP die MWI-Abfrage aktiviert wird und dann als Folge hiervon eine Wahlinformation mit der INTERN-Instanz-Nummer "***#*10100" zur Basisstation BS, RFP übertragen wird. In der Basisstation wird diese Nummer wegen der künstlich erzeugten Ergänzungsnummer "***#*" als Sondernummer bezeichnete INTERN-Instanz-Nummer von der Wahlbewertung ZST, µP als solche wiedererkannt. Daraufhin wird der Anrufbeantworter AB bzw. die INTERN-Instanz SPI1 für die Ausgabe der Nutznachricht angesteuert.

FIGUR 9 zeigt wie die Nutznachricht von der Basisstation ES, RFP zum Mobilteil MT, RPP übertragen wird.

FIGUR 10 zeigt wie das Ereignis "Speicherung einer Nutznachricht für den Benutzer des Mobilteils MT, RPP in der EXTERN-Instanz SPI2" dem Benutzer über eine MWI-Meldung auf dem Display des Mobilteils angezeigt wird. Die MWI-Meldung gibt dabei insbesondere als Absenderinformation eine T-NET-BOX Nummer "01301111" an, anhand der das Telekommunikationsnetz TKN und die EXTERN-Instanz identifizierbar sind. Sie wird von dem Telekommunikationsnetz TKN an die Basisstation BS, RFP übertragen und von dieser an das Mobilteil MT, RPP weitergeleitet.

FIGUR 11 zeigt wie auf Eingabe des Benutzers am Mobilteil MT, RPP die MWI-Abfrage aktiviert wird und dann als Folge hiervon eine Wahlinformation mit der EXTERN-Instanz-Nummer "01301111" zur Basisstation BS, RFP übertragen wird. In der Basisstation wird diese Nummer als eine für das Telekommunikationsnetz TKN bestimmte Nummer von der Wahlbewertung ZST, µP erkannt und dementsprechend an die T-NET-BOX im Telekommunikationsnetz TKN weitergeleitet. Daraufhin wird die T-NET-BOX bzw. die EXTERN-Instanz SPI2 für die Ausgabe der Nutznachricht angesteuert.

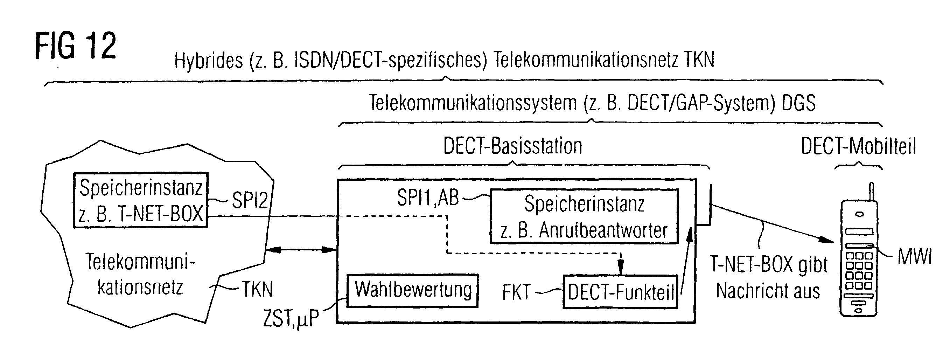

FIGUR 12 zeigt wie die Nutznachricht von dem Telekommunikationsnetz TKN, über die Basisstation BS, RFP zum Mobilteil MT, RPP übertragen wird.

## Patentansprüche

1. Verfahren zum Übertragen von MWI-Dienst-spezifischen Nachrichten in Telekommunikationsnetzen, insbesondere in hybriden DECT/ISDN-spezifischen Telekommunikationsnetzen, bei dem
(a) die MWI-Dienst-spezifischen Nachrichten in Telekommunikationssystemen (DGS) der Telekommunikationsnetze (TKN) von ersten Telekommunikationsgeräten (BS, RFP) zu telekommunikationsteilnehmerspezifischen, mit den ersten Telekommunikationsgeräten (BS, RFP) durch Telekommunikation verbindbaren zweiten Telekommunikationsgeräten (MT, RPP) übertragen werden,
(b) in den MWI-Dienst-spezifischen Nachrichten angegeben wird, dass für die Telekommunikationsteilnehmer Nutznachrichten hinterlegt sind,
**dadurch gekennzeichnet, dass**
(c) die ersten Telekommunikationsgeräte (BS, RFP) Absenderinformationen an die zweiten Telekommunikationsgeräte (MT, RPP) übertragen, mit denen Instanzen im Telekommunikationsnetz zum Hinterlegen der Nutznachrichten bezeichnet werden,
(d) die ersten Telekommunikationsgeräte (BS, RFP) Zusatzinformationen an die zweiten Telekommunikationsgeräte (MT, RPP) übertragen, die angeben, ob die Nutznachrichten bei systeminternen Instanzen (SPI1) oder systemexternen Instanzen (SPI2) der Telekommunikationssysteme (DGS) hinterlegt sind,
(e) die Absenderinformationen und die Zusatzinformationen von zweiten Telekommunikationsgeräten (MT, RPP) an die ersten Telekommunikationsgeräte (BS, RFP) zeitversetzt zurückübertragen werden,
(f) die ersten Telekommunikationsgeräte (BS, RFP) in Abhängigkeit von den zurückübertragenen Zusatzinformationen die zweiten Telekommunikationsgeräte (MT, RPP) den systeminternen Instanzen (SPI1) oder den systemexternen Instanzen (SPI2) der Telekommunikationssysteme (DGS) zuordnen.

2. Verfahren nach Anspruch 1, **dadurch gekennzeichnet, daß**
Telekommunikationsnetzeinrichtungen (T-NET-BOX) in den Telekommunikationsnetzen (TKN) außerhalb der Telekommunikationssysteme (DGS) die MWI-Dienst-spezifischen Nachrichten und die Absenderinformationen zu den mit den Telekommunikationsnetzeinrichtungen (T-NET-BOX) durch Telekommunikation verbindbaren ersten Telekommunikationsgeräten (BS, RFP) übertragen.

3. Verfahren nach Anspruch 2, **dadurch gekennzeichnet, daß**
T-NET-Box-Einrichtungen in den Telekommunikationsnetzen (TKN) als die Telekommunikationsnetzeinrichtungen eingesetzt werden.

4. Verfahren nach Anspruch 2 oder 3, **dadurch gekennzeichnet , daß**
den Telekommunikationsnetzeinrichtungen die systemexternen Instanzen (SPI2) zugeordnet werden.

5. Verfahren nach einem der Ansprüche 1 bis 4, **dadurch gekennzeichnet, daß**
die Telekommunikationsnetze (TKN) öffentliche drahtgebundene oder drahtlose Netze (z.B. ISDN, PSTN, GSM etc.) sind.

6. Verfahren nach einem der Ansprüche 1 bis 5, **dadurch gekennzeichnet, daß**
den ersten Telekommunikationsgeräten (BS, RFP) die systeminternen Instanzen zugeordnet werden.

7. Verfahren nach Anspruch 6, **dadurch gekennzeichnet, daß**
die systeminterne Instanzen der ersten Telekommunikationsgeräte (BS, RFP) in den ersten Telekommunikationsgeräten (BS, RFP) integrierte Anrufbeantworter (AB), SMS-Speicher und/oder Missed Calls-Listen sind.

8. Verfahren nach einem der Ansprüche 1 bis 7, **dadurch gekennzeichnet, daß**
die ersten Telekommunikationsgeräte (BS, RFP) DECT-Basisstationen sind.

9. Verfahren nach einem der Ansprüche 1 bis 8, **dadurch gekennzeichnet, daß**
die zweiten Telekommunikationsgeräte (MT, RPP) DECT-Mobilteile sind.

10. Verfahren nach einem der Ansprüche 1 bis 9, **dadurch gekennzeichnet, daß**
die ersten Telekommunikationsgeräte (BS, RFP) Basisstationen und die zweiten Telekommunikationsgeräte (MT, RPP) Mobilteile sind, die auf hybride, aus den CDMA-, FDMA- und/oder TDMA-Methoden gebildete Vielfachzugriffsverfahren basieren.

11. Verfahren nach Anspruch 4, **dadurch gekennzeichnet, daß**
die Absenderinformationen in den Telekommunikationsnetzeinrichtungen (T-NET-BOX) als einrichtungsspezifische Informationen gebildet werden.

12. Verfahren nach Anspruch 6, **dadurch gekennzeichnet, daß**
die Absenderinformationen in den ersten Telekommunikationsgeräten (BS, RFP) als gerätespezifische Informationen gebildet werden.

13. Verfahren nach einem der Ansprüche 1 bis 12, **dadurch gekennzeichnet, daß**
die Absenderinformationen als Controlling User Number in den MWI-Dienst-spezifischen Nachrichten eingebunden werden.

14. Verfahren nach einem der Ansprüche 1 bis 13, **dadurch gekennzeichnet, daß**
die Zusatzinformationen als zusätzliche Informationen in den MWI-Dienst-spezifischen Nachrichten eingebunden werden.

15. Verfahren nach einem der Ansprüche 1 bis 13, **dadurch gekennzeichnet, daß**
die Zusatzinformationen als zusätzliche Nachrichten zu den MWI-Dienst-spezifischen Nachrichten übertragen werden.

16. Verfahren nach Anspruch 14 oder 15 und nach Anspruch 4,
**dadurch gekennzeichnet, daß**
die Telekommunikationsnetzeinrichtungen (T-NET-BOX) die Zusatzinformationen bilden und an die ersten Telekommunikationsgeräte (BS, RFP) übertragen.

17. Verfahren nach einem der Ansprüche 14 bis 16 und nach Anspruch 6, **dadurch gekennzeichnet, daß**
die ersten Telekommunikationsgeräte (BS, RFP) die Zusatzinformationen bilden.

18. Verfahren nach einem der Ansprüche 1 bis 13, **dadurch gekennzeichnet, daß**
die Zusatzinformationen als eindeutige zu Telekommunikationszwecken noch nicht anderweitig vergebene Ergänzungsinformationen den Absenderinformationen hinzugefügt werden.

19. Verfahren nach Anspruch 18, **dadurch gekennzeichnet, daß**
die Ergänzungsinformationen Zeichensätze sind.

20. Verfahren nach Anspruch 18 oder 19, **dadurch gekennzeichnet , daß**
die Ergänzungsinformationen den Absenderinformationen vorangestellt werden.

21. Verfahren nach Anspruch 18, 19 oder 20 und nach Anspruch 7, **dadurch gekennzeichnet, daß**
die Ergänzungsinformationen und die Absenderinformationen (in den ersten Telekommunikationsgeräten /BS, RFP) als gerätespezifische Informationen gebildet werden.

## Claims

1. A method for transmitting MWI-service-specific messages in telecommunication networks, in particular in hybrid DECT/ISDN-specific telecommunication networks, wherein
(a) the MWI-service-specific messages in telecommunication systems (DGS) of the telecommunication networks (TKN) are transmitted from first telecommunication devices (BS, RFP) to telecommunication-subscriber-specific second telecommunication devices (MT, RPP) which can be connected to the first telecommunication devices (BS, RFP) via telecommunication,
(b) it is specified in said MWI-service-specific messages that user messages are waiting for the telecommunication subscribers,
**characterised in that**
(c) the first telecommunication devices (BS, RFP) transmit sender information to the second telecommunication devices (MT, RPP), with which entities for storing user messages in the telecommunication network are designated,
(d) the first telecommunication devices (BS, RFP) transmit supplementary information to the second telecommunication devices (MT, RPP), which specify whether the user messages are stored in system-internal entities (SPI1) or system-external entities (SPI2) of the telecommunication systems (DGS),
(e) the sender information and the supplementary information are transmitted back from the second telecommunication devices (MT, RPP) to the first telecommunication devices (BS, RFP) at a later time,
(f) depending on the back-transmitted supplementary information, the first telecommunication devices (BS, RFP) assign the second telecommunication devices (MT, RPP) to the system-internal entities (SPI1) or to the system-external entities (SPI2) of the telecommunication systems (DGS).

2. The method as claimed in Claim 1, **characterised in that**
telecommunication network equipment (T-NET-BOX) in the telecommunication networks (TKN) outside of the telecommunication systems (DGS) transmits the MWI-service-specific messages and the sender information to the first telecommunication devices (BS, RFP), which can be connected to the telecommunication network equipment (T-NET-BOX) via telecommunication.

3. The method as claimed in Claim 2, **characterised in that**
T-NET-BOX equipment is installed as the telecommunication network equipment in the telecommunication networks (TKN).

4. The method as claimed in Claim 2 or 3, **characterised in that**
the system-external entities (SPI2) are assigned to the telecommunication network equipment.

5. The method as claimed in one of the Claims 1 to 4, **characterised in that**
the telecommunication networks (TKN) are public wire-based or wireless networks (e.g. ISDN, PSTN, GSM, etc.).

6. The method as claimed in one of the Claims 1 to 5, **characterised in that**
the system-internal entities are assigned to the first telecommunication devices (BS, RFP).

7. The method as claimed in Claim 6, **characterised in that**
the system-internal entities of the first telecommunication devices (BS, RFP) are call answering facilities (AB), SMS storage facilities and/or Missed Calls Lists which are integrated in the first telecommunication devices (BS, RFP).

8. The method as claimed in one of the Claims 1 to 7, **characterised in that**
the first telecommunication devices (BS, RFP) are DECT base stations.

9. The method as claimed in one of the Claims 1 to 8, **characterised in that**
the second telecommunication devices (MT, RPP) are DECT mobile parts.

10. The method as claimed in one of the Claims 1 to 9, **characterised in that**
the first telecommunication devices (BS, RFP) are base stations and the second telecommunication devices (MT, RPP) are mobile parts, said base stations and mobile parts being based on hybrid multiple-access methods which are developed from the CDMA, FDMA and/or TDMA methods.

11. The method as claimed in Claim 4, **characterised in that**
the sender information is generated as equipment-specific information in the telecommunication network equipment (T-NET-BOX).

12. The method as claimed in Claim 6, **characterised in that**
the sender information is generated as device-specific information in the first telecommunication devices (BS, RFP).

13. The method as claimed in one of the Claims 1 to 12, **characterised in that**
the sender information is included as Controlling User Number in the MWI-service-specific messages.

14. The method as claimed in one of the Claims 1 to 13, **characterised in that**
the supplementary information is included as additional information in the MWI-service-specific messages.

15. The method as claimed in one of the Claims 1 to 13, **characterised in that**
the supplementary information is transmitted as additional messages to the MWI-service-specific messages.

16. The method as claimed in one of the Claims 14 or 15 and as claimed in Claim 4, **characterised in that**
the telecommunication network devices (T-NET-BOX) generate the supplementary information and transmit it to the first telecommunication devices (BS, RFP).

17. The method as claimed in one of the Claims 14 to 16 and as claimed in Claim 6, **characterised in that**
the first telecommunication devices (BS, RFP) generate the supplementary information.

18. The method as claimed in one of the Claims 1 to 13, **characterised in that**
the supplementary information is added to the sender information as auxiliary information which is clearly for the purposes of telecommunication and is not yet otherwise specified.

19. The method as claimed in Claim 18, **characterised in that**
the auxiliary information comprises character sets.

20. The method as claimed in Claim 18 or 19, **characterised in that**
the auxiliary information is placed in front of the sender information.

21. The method as claimed in Claim 18, 19 or 20 and as claimed in Claim 7, **characterised in that**
the auxiliary information and the sender information are generated in the first telecommunication devices (BS, RFP) as device-specific information.

## Revendications

1. Procédé pour transmettre des messages spécifiques au service MWI dans des réseaux de télécommunication, notamment dans des réseaux de télécommunication hybrides spécifiques DECT/ISDN, dans lesquels
(a) les messages spécifiques de service MWI dans des systèmes de télécommunication (DGS) des réseaux de télécommunication (TKN) sont transférés de premiers appareils de télécommunication (BS, RFP) à des seconds appareils de télécommunication (MT, RPP) spécifiques aux abonnés de télécommunication et pouvant être reliés aux premiers appareils de télécommunication (BS, RFP) par télécommunication,
(b) on indique dans les messages spécifiques au service MWI que des messages courts sont déposés pour les abonnés de télécommunication,
**caractérisé en ce que**
(c) les premiers appareils de télécommunication (BS, RFP) transmettent des informations d'expéditeur aux seconds appareils de télécommunication (MT, RPP), avec lesquels des instances sont désignées dans les réseaux de télécommunication pour le dépôt des messages courts,
(d) les premiers appareils de télécommunication (BS, RFP) transmettent des informations supplémentaires aux seconds appareils de télécommunication (MT, RPP), qui indiquent si les messages courts sont déposés dans des instances (SPI1) internes au système ou des instances (SPI2) externes au système des systèmes de télécommunication (DGS),
(e) les informations d'expéditeur et les informations supplémentaires sont transmises en retour des seconds appareils de télécommunication (MT, RPP) aux premiers appareils de télécommunication (BS, RFP) avec un décalage dans le temps,
(f) les premiers appareils de télécommunication (BS, RFP) attribuent en fonction des informations supplémentaires transmises en retour les seconds appareils de télécommunication (MT, RPP) aux instances (SPI1) internes au système ou aux instances (SPI2) externes au système des systèmes de télécommunication (DGS).

2. Procédé selon la revendication 1, **caractérisé en ce que**
les dispositifs de réseau de télécommunication (T-NET-BOX) dans les réseaux de télécommunication (TKN) à l'extérieur des systèmes de télécommunication (DGS) transmettent les messages spécifiques au service MWI et les informations d'expéditeur aux premiers appareils de télécommunication (BS, RFP) pouvant être reliés aux dispositifs de réseau de télécommunication (T-NET-BOX) par télécommunication.

3. Procédé selon la revendication 2, **caractérisé en ce que**
des dispositifs T-NET-BOX sont utilisés dans les réseaux de télécommunication (TKN) comme dispositifs de réseau de télécommunication.

4. Procédé selon la revendication 2 ou 3, **caractérisé en ce que**
les instances (SPI2) externes au système sont attribuées aux dispositifs de réseau de télécommunication.

5. Procédé selon l'une quelconque des revendications 1 à 4, **caractérisé en ce que**
les réseaux de télécommunication (TKN) sont des réseaux publics liés par fil ou sans fil (par exemple ISDN, PSTN, GSM, etc.)

6. Procédé selon l'une quelconque des revendications 1 à 5, **caractérisé en ce que**
les instances internes au système sont attribuées aux premiers appareils de télécommunication (BS, RFP).

7. Procédé selon la revendication 6, **caractérisé en ce que**
les instances internes au système des premiers appareils de télécommunication (BS, RFP) dans les premiers appareils de télécommunication (BS, RFP) sont des répondeurs (AB) intégrés, des mémoires SMS et/ou des listes de Missed Calls.

8. Procédé selon l'une quelconque des revendications 1 à 7, **caractérisé en ce que**
les premiers appareils de télécommunication (BS, RFP) sont des stations de base DECT.

9. Procédé selon l'une quelconque des revendications 1 à 8, **caractérisé en ce que**
les seconds appareils de télécommunication (MT, RPP) sont des parties mobiles DECT.

10. Procédé selon l'une quelconque des revendications 1 à 9, **caractérisé en ce que**
les premiers appareils de télécommunication (BS, RFP) sont des stations de base et les seconds appareils de télécommunication (MT, RPP) sont des parties mobiles qui sont basées sur des procédés d'accès multiples hybrides et formés à partir des méthodes CDMA, FDMA et/ou TDMA.

11. Procédé selon la revendication 4, **caractérisé en ce que**
les informations d'expéditeur dans les dispositifs de réseau de télécommunication (T-NET-BOX) sont formées comme des informations spécifiques au dispositif.

12. Procédé selon la revendication 6, **caractérisé en ce que**
les informations d'expéditeur dans les premiers appareils de télécommunication (BS, RFP) sont formées comme des informations spécifiques aux appareils.

13. Procédé selon l'une quelconque des revendications 1 à 12, **caractérisé en ce que**
les informations d'expéditeur sont intégrées en tant que Controlling User Number dans les messages spécifiques au service MWI.

14. Procédé selon l'une quelconque des revendications 1 à 13, **caractérisé en ce que**
les informations supplémentaires sont intégrées en tant qu'informations supplémentaires dans les messages spécifiques au service MWI.

15. Procédé selon l'une quelconque des revendications 1 à 13, **caractérisé en ce que**
les informations supplémentaires sont transférées en tant que messages supplémentaires aux messages spécifiques au service MWI.

16. Procédé selon la revendication 14 ou 15 et selon la revendication 4, **caractérisé en ce que**
les dispositifs de réseau de télécommunication (T-NET-BOX) forment les informations supplémentaires et les transmettent aux premiers appareils de télécommunication (BS, RFP).

17. Procédé selon l'une quelconque des revendications 14 à 16 et selon la revendication 6, **caractérisé en ce que**
les premiers appareils de télécommunication (BS, RFP) forment les informations supplémentaires.

18. Procédé selon l'une quelconque des revendications 1 à 13, **caractérisé en ce que**
les informations supplémentaires sont ajoutées aux informations d'expéditeur en tant qu'informations complémentaires définies et non encore attribuées autrement à des fins de télécommunication.

19. Procédé selon la revendication 18, **caractérisé en ce que**
les informations complémentaires sont des ensembles de caractères.

20. Procédé selon la revendication 18 ou 19, **caractérisé en ce que**
les informations complémentaires sont placées avant les informations d'expéditeur.

21. Procédé selon la revendication 18, 19 ou 20 et selon la revendication 7, **caractérisé en ce que**
les informations complémentaires et les informations d'expéditeur dans les premiers appareils de télécommunication (BS, RFP) sont formées comme des informations spécifiques aux appareils.
